# EUROPEAN PATENT SPECIFICATION

(11) **EP 2 774 497 B1**
(45) Date of publication and mention of the grant of the patent: **14.01.2015**
(21) Application number: 13157731.4
(22) Date of filing: 05.03.2013
(51) Int. Cl.: A23L 1/40, A23L 1/304, A23L 1/228, A23L 1/03

(54) **Fortified savoury food concentrate**
Verstärktes, pikantes Lebensmittelkonzentrat
Concentré alimentaire goûteux enrichi

(43) Date of publication of application: 10.09.2014
(73) Proprietor: Unilever N.V., 3013 AL Rotterdam (NL); Unilever Plc., London, Greater London EC4Y 0DY (GB)
(72) Inventor: Jansen, Franciscus Johannes Henricus Maria, 3133 AT Vlaardingen (NL); Velikov, Krassimir Petkov, 3133 AT Vlaardingen (NL)
(74) Representative: Reijns, Tiemen Geert Pieter

(56) References cited:
- WO-A1-87/06433
- WO-A1-2009/068378
- WO-A1-2010/086192

## Description

The present invention relates to a savoury food concentrate comprising iron phosphate and a process to produce the same.

### Background of the invention

Savoury food concentrates, like seasoning cubes are a well known concentrate food product which is normally dissolved before consumption. It is normally dissolved in water or a dish, in this way giving rise to a bouillon, a soup, a sauce, a gravy or a seasoned dish. A savoury food concentrate cube normally comprises salt and often glutamate, which, among other functions, contribute to the taste impact on the food product which results upon dilation of the bouillon cube. A bouillon cube has been recognised in the field as a relatively cheap and convenient way to provide iron to the population. This is especially relevant for a population which suffers from a lack of iron in its diet, as can be observed in several developing countries. Iron-fortified bouillon cubes have been described in the art.

WO2009/068378 discloses a bouillon cube comprising, based on the weight of the bouillon cube: 30-70 percent wt. NaCl, 10-45 percent wt. monosodium glutamate, and at least one iron compound of the group of ferric sodium EDTA, reduced iron, ferrous lactate, ferric citrate, ferric pyrophosphate, ferrous sulphate monohydrate, ferric ammonium citrate brown, in such an amount that the bouillon cube comprises an amount of Fe²⁺ and/or Fe³⁺ taken together of from at least 0.01 percent wt. and less than 2 percent wt, based on the weight of the bouillon cube. This document aims at reduction of off-color in the food product resulting after dilution of the fortified cube.

WO2010/086192 discloses a dry savoury food concentrate comprising NaCl, an iron ion selected from the group consisting of Fe2⁺ and Fe³⁺ and mixtures thereof, which iron ion is derived from an added iron compound which is dissolvable in an aqueous solution. This document aims at reduction of staining of the cooking pot during cooking when a fortified food concentrate is used.

The problem of off-color related to iron fortification not only appears on the level of the cooking pot and the ready-to-eat food product which results upon dilution of the food concentrate, for example a seasoning cube, but can also be present in the food concentrate itself. Such an appearance of off-coloring may be observed after a certain time of storage, which can depend on relative air humidity and temperature during transport and storage in the shop and by the consumer at home. It may be perceived that especially in tropical or sub-tropical areas the risk for off-coloring effects is higher than in moderate climates. It is however also the sub-tropical and tropical area where fortified products can show their highest benefit to the population. Off-coloring can be observed for example in the form of dark spots or stains on the surface of the food concentrate, e.g. on the surface of a seasoning cube.

The respective mechanisms which underlie these iron-related off-coloring effects are not clear. It was observed that the appearance of off-color on the food concentrate, was significant when glutamate was present. Without willing to be bound to theory, the presence of glutamate appears to have a negative influence on the appearance of a iron-fortified food concentrate.

It is therefore an aim of the present invention to provide a glutamate containing savoury food concentrate which comprises an iron salt, wherein the amount of off-color which appears upon storage of the food concentrate is reduced, preferably wherein off-coloring is absent.

### Summary of the invention

This aim was surprisingly met by a savoury food concentrate comprising:
- NaCl,
- glutamate,
- iron salt, further comprising
- phosphate salt, not being an iron phosphate.

The invention further relates to a process to provide a savoury food concentrate according to the invention, the process comprising the steps of:
b) preparing a mixture comprising
   - NaCl,
   - iron salt,
   - glutamate, and further comprising
   - phosphate salt, not being an iron phosphate,
c) packaging.

### Detailed description of the invention

### NaCl

The present invention relates to a savoury food concentrate. The savoury character of the food concentrate is at least partly created by the presence of NaCl. The concentrate of the invention therefore comprises NaCl, preferably in an amount of from 10 to 70 wt%, preferably of from 30 wt% to 70 wt%, more preferably of from 40 wt% to 65 wt%, even more preferably of from 45 wt% to 60 wt%, based on the weight of the food concentrate. It can be preferred that in addition to NaCl, optionally a potassium salt is present, like for example KCI, for example to replace part of the NaCl by potassium salt. Potassium salt, preferably KCI, can preferably be present in a ratio potassium salt, preferably KCI, to NaCl of from 1:10 to 1:1, preferably of from 1:10 to 1:2.

### Glutamate

The savoury food concentrate of the invention comprises glutamate. Although glutamate contributes to the savoury character of the food concentrate, without willing to be bound to theory, it appeared that the presence of glutamate is associated with off-coloring in the iron-fortified food concentrate. The type and intensity of off-coloring can depend on the type and amount of iron salt present in the food concentrate and the time and circumstances of storage. In general, the off-coloring results in a darker appearance of the food concentrate, that can go from brownish, to dark brown, even towards black color of the food concentrate. Especially iron sulphate can provide off color in the form of dark speckles, developing towards general dark coloring after prolonged storage time. In general, the amount of off color tends to increase with increased storage time.
Preferably, the invention relates to a food concentrate wherein glutamate comprises one of the group consisting of mono sodium glutamate, potassium glutamate, glutamic acid and mixtures thereof. More preferably, glutamate comprises mono sodium glutamate. Glutamate is preferably present in an amount of from 0.5 to 45 wt%, more preferably in an amount of from 1 to 35 wt%, even more preferably in an amount of from 5 to 30 wt%, most preferably in an amount of from 7 to 20 wt%, based on the weight of the food concentrate. Preferably the savoury food concentrate comprises monosodium glutamate, which is preferably present in an amount of from 0 to 45 wt%, more preferably in an amount of from 1 to 35 wt%, even more preferably in an amount of from 5 to 30 wt%, most preferably in an amount of from 7 to 20 wt%, based on the weight of the food concentrate.

### Iron salt

The savoury food concentrate of the invention comprises iron salt. The iron salt preferably comprises, more preferably is, an iron salt selected from the group consisting of ferrous sulphate, ferrous gluconate, ferrous lactate, ferrous bisglycinate, ferrous fumerate, ferric orthophosphate, ferric pyrophosphate, ferrous tartrate, ferrous succinate, ferrous saccharate, ferrous orthophosphate and mixtures thereof.
Even more preferably, the iron salt comprises, even more preferably is an iron salt selected from the group consisting of iron phosphate, ferrous sulphate and mixtures thereof. Iron phosphate is a term known to the skilled artisan and comprises the group of salts comprising one or more iron atoms and one or more phosphate groups. It comprises for example ferric orthophosphate, ferric pyrophosphate, or ferrous orthophosphate.
Even more preferably, the iron salt comprises, even more preferably is, ferric pyrophosphate or ferrous sulphate or a mixture thereof.
Even more preferably the iron salt comprises ferric pyrophosphate, even more preferably is ferric pyrophosphate.

Iron salt is preferably present in an amount of from 0.03 to 2 wt%, more preferably of from 0.07 to 1 wt%, based on the weight of the food concentrate.
Preferably, the food concentrate comprises an iron salt selected from the group consisting of ferrous sulphate, ferrous gluconate, ferrous lactate, ferrous bisglycinate, ferrous fumerate, ferric orthophosphate, ferric pyrophosphate, ferrous tartrate, ferrous succinate, ferrous saccharate, ferrous orthophosphate and mixtures thereof in an amount of from 0.03 to 2 wt%, more preferably of from 0.07 to 1 wt%, based on the weight of the food concentrate. It can be preferred that an iron salt is selected from this list, to be present in the food concentrate, which iron salt individually can be present in an amount of from 0.03 to 2 wt%, more preferably of from 0.07 to 1 wt%, based on the weight of the food concentrate.
More preferably, the food concentrate comprises an iron salt selected from the group consisting of ferric pyrophosphate, ferrous sulphate and a mixture thereof in an amount of from 0.03 to 2 wt%, more preferably of from 0.07 to 1 wt%, based on the weight of the food concentrate.
Even more preferably, the food concentrate comprises ferric pyrophosphate in an amount of from 0.03 to 2 wt%, more preferably of from 0.07 to 1 wt%, based on the weight of the food concentrate.

### Phosphate salt

The savoury food concentrate of the invention comprises a phosphate salt. The phosphate salt is not an iron-phosphate salt, as iron-phosphate salt is separately categorised in this description under 'iron salt'. Indeed, in case the iron salt is an iron phosphate, the food concentrate comprises in addition to said iron phosphate another phosphate salt that is not an iron phosphate.

The phosphate salt preferably comprises a phosphate salt, more preferably is a phosphate salt, selected form the group consisting of orthophosphate salt, diphosphate salt, triphosphate salt, polyphosphate salt and mixtures thereof. The phosphate salt preferably comprises a salt selected from the group consisting of Na-phosphate salt, K-phosphate salt, Ca-phosphate salt and Mg-phosphate salt. More preferably, the phosphate salt comprises Na-phosphate salt. Preferably Na-phosphate salts comprise Na3PO4, Na2HPO4, NaH2PO4, sodium pyrophosphate, sodium triphosphate, sodium polyphosphate and mixtures thereof. Preferably, K-phosphate salts comprise K3PO4, K2HPO4, KH2PO4, potassium pyrophosphate, potassium triphosphate, potassium polyphosphate and mixtures thereof. The phosphate salt preferably comprises a salt selected from the group consisting of Na3PO4, Na2HPO4, NaH2PO4, K3PO4, K2HPO4, KH2PO4, calcium phosphate, magnesium phosphate, sodium pyrophosphate, sodium triphosphate, potassium pyrophosphate, potassium triphosphate, sodium polyphosphate, potassium polyphosphate and mixtures thereof. More preferably, the phosphate salt comprises a salt selected from the group consisting of Na3PO4, Na2HPO4, NaH2PO4, K3PO4, K2HPO4, KH2PO4, sodium pyrophosphate, sodium triphosphate, potassium pyrophosphate, potassium triphosphate and mixtures thereof. Most preferably, the phosphate salt comprises Na-pyrophosphate. The phosphate salt is preferably Na-pyrophosphate.

Phosphate salt, not being an iron phosphate, preferably Na-phosphate salt, is preferably present in an amount of from 0.03 to 20 wt%, more preferably from 0.07 to 10 wt%, even more preferably of from 0.1 to 5 wt%, even more preferably of from 0.2 to 2 wt%, based on the weight of the food concentrate.

It is especially preferred if the iron salt comprises ferric pyrophosphate and the phosphate salt comprises sodium pyrophosphate.

The molar ratio of iron salt, preferably iron pyrophosphate, to phosphate salt (not being an iron-phosphate), preferably Na-pyro phosphate, is preferably of from 0.1 to 10, preferably of from 0.25 to 5, most preferably of from 0.5 to 2.

### Binder

The food concentrate of the invention can comprise a binder, for example to maintain the desired texture and/or shape of the food concentrate. A binder is especially preferred when the food concentrate is in the form of a cube or tablet. Preferably, the binder comprises one selected from the group consisting of fat, polysaccharide, sugar, and mixtures thereof. Sugar preferably comprises monosaccharide. Polysaccharide preferably comprises starch, gums or mixtures thereof.

### Fat

The food concentrate of the invention preferably comprises fat. This is preferred especially when the food concentrate is a cube or tablet, such as a bouillon cube or tablet, a soup cube or tablet or a seasoning cube or tablet. Fat can function as a binder. Fat preferably comprises a fat selected from the group consisting of chicken fat, beef fat, vegetable fat, pork fat and mixtures thereof. Fat is preferably present in an amount of from 1 to 35 wt%, preferably of from 5 to 30 wt%, more preferably of from 10 to 20 wt%. Especially if the food concentrate is an extruded food concentrate, like for example an extruded cube or tablet, also known in the field as 'pasty' cube, the fat is preferably present in an amount of from 10 to 35 wt%, more preferably of from 15 to 30 wt%, most preferably of from 17 to 25 wt%. Especially if the food concentrate is a pressed cube or tablet or a roller-formed cube or tablet, the fat is preferably present in an amount of from 1 to 20 wt%, preferably of from 5 to 15 wt%, most preferably of from 7 to 12 wt%. However, it might be preferred that the food concentrate has a low fat level, for example of lower than 15 wt%, for example of between 0.1 and 15 wt%., more preferably of lower than 10 wt%, for example of between 0.1 and 10 wt%., even more preferably lower than 5 wt, for example of between 0.1 and 5 wt%, or lower than 2 wt% for example of between 0.1 and 2 wt%, or even lower than 1 wt%., for example of between 0.1 and 1 wt%. These low fat levels might be preferred for example in case of low-fat cubes or tablets or in case of water-based granules or powders, for example bouillon-, soup-, or seasoning granules or powder.

### Starch

The food concentrate may preferably comprise starch. Starch is preferably present in an amount of from 0.1 to 15 wt%, 2 to 15 wt%, more preferably of from 5 to 12 wt%, most preferably of from 7 to 10 wt%. Starch can function as a filler. It may further contribute to the mouth feel of the food product resulting upon dilution of the food concentrate. Starch is preferably selected from the group consisting of corn starch, tapioca starch, pea starch, potato starch and mixtures thereof. The starch is preferably non-gelatinised starch. It might be preferred however, that starch comprises gelatinised starch, especially when the starch is used as a binder, a preferred amount of non-gelatinised starch, based on the weight of the food concentrate, can be of from 0.1 to 10 wt%.

### Water

The food concentrate of the present invention is preferably a dry food concentrate. Although some water can be present in the food concentrate, it comprises preferably less than 10 wt% of total water, more preferably less than 5 wt%, for example from 1 to 10 wt% or from 2 to 5 wt% of total water, based on the weight of the food concentrate. Total water includes water which may be present in the other ingredients of the food concentrate.

The water activity of the food concentrate is preferably of between 0.1 and 0.6, more preferably of between 0.15 and 0.4, most preferably of between 0.2 and 0.3.

As is commonly understood in the art, salts as described in the present document may, at least partly, dissolve in the food concentrate, especially when water is present. "Salt", like NaCl, glutamate, iron salt and phosphate salt includes the dissolved or partly dissolved or dissociated form of these respective salts. For example, the part of the total amount of added NaCl, which turns into the dissolved form in the food concentrate, contributes to the total amount of NaCl in the food concentrate.

### Taste imparting components

It can be preferred that the food concentrate comprises plant particles, for example particles from herbs or from vegetable. The plant particles are preferably present in an amount of from 0.1 wt% to 20 wt%, more preferably of from 0.5 wt% to 10 wt%, even more preferably of from 1 to 5 wt%, or they can be preferred to be present in an amount of from 0.5 to 2 wt% (dry weight of the plant particles based on weight of the food concentrate).

The food concentrate of the present invention preferably comprises flavours. Flavours can be present for example in an amount of for example 0.1 wt% to 10 wt%, more preferably of from 0.5 wt% to 8 wt%, (dry weight of the flavours based on weight of the food concentrate). Flavours are preferably selected from the group consisting of vegetable flavour, meat flavour and mixtures thereof. Meat flavour preferably comprises flavours selected from the group consisting of chicken flavour, fish flavour, beef flavour, pork flavour, lamb flavour, and mixtures thereof. Vegetable flavour preferably comprises spices.

The food concentrate might contain extract of beef. The food concentrate may contain extract of yeast, alternatively to, or in addition to extract of beef. Extract of beef and extract of yeast can individually be present in an amount of from 1 to 10 wt%, preferably in an amount of from 2 to 7 wt%, based on the weight of the food concentrate. It can be preferred that the total amount of beef extract and yeast extract taken together is present in an amount of from 1 to 10 wt%, preferably in an amount of from 2 to 7 wt%, based on the weight of the food concentrate.

The savoury food concentrate is preferably in the form of a cube, a tablet, a granule, or a powder. It is more preferably a cube or a tablet, most preferably a pressed cube or tablet. A cube or tablet is preferably between 2 and 30 grams, preferably of between 3 and 20 grams, more preferably of between 4 and 12 grams. A cube and tablet are terms used in this description inter-exchangeable, as common in the field, and do not refer necessarily to geometrically defined structures. It can be preferred however that the cube is a regular figure wherein height, width and height have the same size. It can be preferred that the tablet is an oblong wherein the longest dimension (length) and the second-longest dimension (width) 1:1 to 1:3, preferably of between 1:1 to 1:2. The longest dimension (length) and the shortest dimension (height) preferably relate to eah other as 1:2 to 1:6.

The savoury food concentrate is preferably a concentrate selected from the group consisting of a bouillon concentrate, a soup concentrate, a gravy concentrate, a sauce concentrate and a seasoning concentrate.

Preferably, the present invention relates to a savoury food concentrate in the form of a cube or a tablet comprising glutamate, NaCl, iron salt and a phosphate salt, wherein
- NaCl is present in an amount of from 10 to 70 wt%,
- Glutamate is present in an amount of from 0.5 to 45%,
- Iron salt is present in an amount of from 0.03 to 2 wt%, and wherein the iron- salt is selected from the group consisting of ferrous sulphate, ferrous gluconate, ferrous lactate, ferrous bisglycinate, ferrous fumerate, ferric orthophosphate, ferric pyrophosphate, ferrous tartrate, ferrous succinate, ferrous saccharate, ferrous orthophosphate and mixtures thereof, preferably wherein the iron- salt is selected from the group consisting of iron phosphate, ferrous sulphate and mixtures thereof, most preferably wherein the iron salt is selected from the group consisting of ferrous sulphate, ferric pyrophosphate and mixtures thereof.
- phosphate salt, not being an iron phosphate, is present in an amount of from 0.03 to 20 wt%, and wherein the phosphate salt is selected from the group consisting of Na3PO4, Na2HPO4, NaH2PO4, K3PO4, K2HPO4, KH2PO4, calcium phosphate, magnesium phosphate, sodium pyrophosphate, sodium triphosphate, potassium pyrophosphate, potassium triphosphate, sodium polyphosphate, potassium polyphosphate and mixtures thereof.

The savoury food concentrate is preferably packaged. It can be packaged for example in a wrapper, a sachet, a box or a tub.

### Process

In a further aspect, the present invention relates to a process to provide a food concentrate according to the invention, the process comprising the steps of:
a) preparing a mixture comprising:
   - NaCl,
   - glutamate
   - iron salt, preferably selected from the group consisting of ferrous sulphate, ferrous gluconate, ferrous lactate, ferrous bisglycinate, ferrous fumerate, ferric orthophosphate, ferric pyrophosphate, ferrous tartrate, ferrous succinate, ferrous saccharate, ferrous orthophosphate and mixtures thereof"
   - phosphate salt, not being an iron phosphate, wherein the phosphate salt is preferably selected from the group consisting of Na3PO4, Na2HPO4, NaH2PO4, K3PO4, K2HPO4, KH2PO4, calcium phosphate, magnesium phosphate, sodium pyrophosphate, sodium triphosphate, potassium pyrophosphate, potassium triphosphate, sodium polyphosphate, potassium polyphosphate and mixtures thereof.
b) packaging,
to result in a food concentrate.

In step a) a mixture is provided comprising NaCl, iron phosphate and phosphate salt. The mixture can further comprise fat, water, starch, flavour.

NaCl is preferably added to the mixture of step a) in an amount of from 30 wt% to 70 wt%, more preferably of from 40 wt% to 65 wt%, even more preferably of from 45 wt% to 60 wt%, based on the weight of the resulting food concentrate.

Glutamate is preferably added in an amount of from 0.5 to 45 wt%, more preferably in an amount of from 1 to 35 wt%, even more preferably in an amount of from 5 to 30 wt%, most preferably in an amount of from 7 to 20 wt%, based on the weight of the resulting food concentrate. Preferably glutamate is added in the form of monosodium glutamate. Mono sodium glutamate is preferably added in an amount of from 0.5 to 45 wt%, more preferably in an amount of from 1 to 35 wt%, even more preferably in an amount of from 5 to 30 wt%, most preferably in an amount of from 7 to 20 wt%.

Iron salt is preferably added to the mixture of step a) in an amount of from 0.03 to 2 wt%, more preferably of from 0.07 to 1 wt%, based on the weight of the resulting food concentrate. Fe-pyro phosphate and/or ferrous sulphate is preferably added in an amount of from 0.03 to 2 wt%, more preferably of from 0.07 to 1 wt%, based on the weight of the resulting food concentrate.

Iron salt, preferably iron phosphate and/or ferrous sulphate, more preferably iron pyrophosphate and/or ferrous sulphate, and phosphate salt, not being an iron-phosphate, preferably Na-pyro phosphate, are preferably added to result in a molar ratio of iron phosphate, preferably iron pyrophosphate, to phosphate salt, not being an iron-phosphate, preferably Na-pyro phosphate, of from 0.1 to 10, preferably of from 0.25 to 5, most preferably of from 0.5 to 2, as present in the resulting food concentrate.

Phosphate salt, not being an iron phosphate, preferably Na-phosphate salt, is preferably added in an amount of from 0.03 to 20 wt%, more preferably from 0.07 to 10 wt%, even more preferably of from 0.1 to 5 wt%, even more preferably of from 0.2 to 2 wt%, based on the weight of the resulting food concentrate.

Water can be added to the mixture of step a). If added, it is preferably added in an amount of from 0.5 to 4 wt%, preferably in an amount of from 1 to 3 wt%, based on the weight of the total resulting food concentrate.

If fat is present, it is preferably added to the mixture of step a) in the total amount of from 1 to 35 wt%, preferably of from 5 to 30 wt%, more preferably of from 10 to 20 wt%. Especially if the food concentrate is an extruded food concentrate, like for example an extruded cube, also known in the field as 'pasty' cube, the fat is preferably added in a total amount of from 10 to 35 wt%, more preferably of from 15 to 30 wt%, most preferably of from 17 to 25 wt%. Especially if the food concentrate is a pressed cube or a roller formed cube, the fat is preferably added in a total amount of from 1 to 20 wt%, preferably of from 5 to 15 wt%, most preferably of from 7 to 12 wt%.

The process according to the invention may further comprise the step of shaping the mixture resulting from step a). Shaping preferably comprise compressing or extruding the mixture of step a) to result in a cube or tablet. These technologies are known in the art and can be carried out for example by a press from Fette^{™} or Bonals^{™}, to obtain a hard cube, also known as pressed cube or by an extruder from Corazza^{™}, to obtain an extruded cube, also known as soft cube or as pasty cube. The compressing can alternatively be carried out by roller compaction. Shaping can comprise roller formation. These shaping techniques have been described in the art.
Shaping may comprise one of granulation, agglomeration, or roller compaction, for example in case granules or pellets are desired. These technologies are known in the art. Granulation is preferably carried out in a basket granulator, as known in the art.
Accordingly, the process of the present invention preferably comprises shaping, wherein shaping comprises a technique selected from the group consisting of compression, extrusion, roller compacting, granulation, agglomeration and mixtures thereof.

The process of the invention further comprises the step of packaging. The mixture resulting from step a) or the shaped mixture, in case the process comprises the step of shaping the mixture resulting from step a), is packaged, for example to allow transportation and/or dosing of the product. Preferably packaging comprises packaging in a packaging selected from a wrapper, a jar, a box, a tub, a sachet and mixtures thereof.

The present invention further relates to the use of a concentrate according to the invention for preparing a bouillon, a soup, a sauce, a gravy or a seasoned dish.

The invention describes a savoury food concentrate comprising glutamate, NaCl, iron salt and further comprising a phosphate salt, wherein said phosphate salt is different from an iron phosphate. By the present invention the appearance of off-color in glutamate containing savoury food concentrates which are fortified with an iron salt can be significantly reduced.

The invention will now be exemplified by the following, non limiting Examples:

### Examples

**Materials and Methods -** Corn starch 'C*GEL LM03411' was obtained from Cargill UK Ltd. Yeast extract 'Gistex Xtra Light' was obtained from DSM Food Specialties (min.weight MSG 3.0 weight%). Ferrous sulphate, ferric pyrophosphate and iron phosphate were obtained from Dr. Paul Lohmann GmbH KG. Sodium pyrophosphate was obtained from BK Guilini. Trisodium citrate was obtained from Merck. Sodium dicalcium EDTA was obtained from Akzo. Sodium polyphosphate was obtained from Riedel-de-Haen. All other phosphates were obtained from Sigma Aldrich.

**Preparation of seasoning cubes -** All the materials, with the exception of the palm stearate and the iron salt are weighed together in a plastic jar and mixed with a mixer (Kenwood Chef Premier KMC650) for 1 minute at speed setting 4. The palm stearate is molten by placing a container containing it in a hot water bath and is added to the mixture when liquid, after which the mixture is mixed for 1 minute at speed setting 6. The iron salt is added and again the mixture is mixed for 1 minute at speed setting 6. 4 Grams of this mixture at a time are transferred in the pressing block of an Instron press (Instron 5567) and the cube is pressed at 5 kN. This procedure is repeated for each cube.

**Test procedure** - Off-color formation is analysed in an accelerated off-color test. Two cubes are put on a plastic holder and placed in a 100 ml glass jar. 1 Gram of water is added in the jar in such a way that the cube does not come into direct contact with the water. This procedure simulates typical storage conditions of commercial products, where the water content of seasoning cubes increases over time, but in an accelerated fashion. The jars are closed with an lid and placed in an oven at 40°C for the accelerated test. Results are given after three weeks. For example, after 3 weeks comparative samples containing ferrous sulphate are very dark, and comparative samples with iron pyrophosphate show significant discoloration. The off-color formation was representative for discolouration observed after longer storage times in real-life.

**Colour measurements -** Off-color formation was analysed by a color measurement as known in the art. All colour measurement have been performed by using a DigiEye Imaging system from VeriVide Ltd. From photographs under controlled and calibrated conditions the L*a*b* values were determined. The colour difference ΔE was determined using the formula: ΔE = square root of ((L₁*-L₀*)² + (a₁*-a₀*)² +(b₁*-b₀* )² ). Where L₁*, a₁* and b₁* are the colour values for the sample, and the L₀*, a₀* and b₀* are the values for the reference relative to which the colour value is expressed. In the examples mentioned hereafter all colour differences are expresses as ΔE relative to the formulation without any iron added. A high ΔE value represents a relatively high amount of off-color. All values given represent average of duplo measurements.

### Example 1

In this experiment, a seasoning cube without iron - composition 1 (table 1) - was compared to a seasoning cube with FeSO4, iron pyrophosphate and a combination of iron pyrophosphate and 1 equivalent of sodium pyrophophate (composition 2, 3 and 4 in table 1). In each case, the total iron content was kept constant and the formulation was adapted in the amount of sodium chloride.

**Table 1: compositions of Example 1; all numbers in weight%. Comp.=composition. Compar. Comp.= comparative composition.**

| **Ingredient** | **Compar. comp. 1 (no iron salt)** | **Compar. comp. 2 (Fe pyrophosphate)** | **Comp. 3 (Iron pyrophosphate + Na pyrophosphate)** |
|---|---|---|---|
| NaCl | 53 | 52.6 | 52.2 |
| Sucrose | 15.5 | 15.5 | 15.5 |
| Corn starch | 5.7 | 5.7 | 5.7 |
| Palm stearate | 7 | 7 | 7 |
| MSG | 14 | 14 | 14 |
| Yeast | 3 | 3 | 3 |
| Herbs and spices | 1.8 | 1.8 | 1.8 |
| Ferric pyrophosphate | | 0.4 | 0.4 |
| Sodium pyrophosphate | | | 0.4 |
| **total** | **100** | **100** | **100** |

The seasoning cubes were prepared, tested in an accelerated test and color measurements were performed, as described in the Materials and Methods section above. The results are given in table 2 in L*a*b* and corresponding ΔE value relative to the reference sample without iron.

**Table 2: L*a*b* values of the seasoning cubes measured in the accelerated test after 21 days. Delta E values relative to composition 1.**

| | **L*** | **a*** | **b*** | **Delta E** |
|---|---|---|---|---|
| **Compar. comp. 1** | 62.6 | 11.8 | 58.1 | 0 |
| **Compar. comp. 2** | 55.17 | 12.4 | 47.1 | 13.3 |
| **composition 3** | 61.6 | 11.6 | 53.8 | 4.4 |

Off color was observed as a darker, brownish appearance of the cube. The addition of sodium pyrophosphate significantly reduces the off-colour formation of the cube after storage.

### Example 2

Following the same procedures as described in Example 1, ferric pyrophosphate in combination with various phosphates were tested. The compositions are given in table 3, the results in table 4.

**Table 3: compositions of Example 2; all numbers in weight%. Comp.=composition. compar. Comp.= comparative composition.**

| **Ingredient** | **Compar. Comp. 1** | **Compar. Comp. 2** | **Comp. 3** | **Comp. 4** | **Comp. 5** |
|---|---|---|---|---|---|
| NaCl | 53.0 | 52.6 | 52.3 | 51.9 | 52.4 |
| Sucrose | 15.5 | 15.5 | 15.5 | 15.5 | 15.5 |
| Corn starch | 5.7 | 5.7 | 5.7 | 5.7 | 5.7 |
| Palm stearate | 7.0 | 7.0 | 7.0 | 7.0 | 7.0 |
| MSG | 14.0 | 14.0 | 14.0 | 14.0 | 14.0 |
| Yeast | 3.0 | 3.0 | 3.0 | 3.0 | 3.0 |
| Herbs and spices | 1.8 | 1.8 | 1.8 | 1.8 | 1.8 |
| Ferric pyrophosphate | | 0.4 | 0.4 | 0.4 | 0.4 |
| Sodium dihydrogen phosphate | | | 0.3 | | |
| sodium triphosphate | | | | 0.7 | |
| Sodium polyphosphate | | | | | 0.2 |
| **total** | **100.0** | **100.0** | **100.0** | **100.0** | **100.0** |

**Table 4: L*a*b* values of the seasoning cubes measured in the accelerated test after 21 days. Delta E values relative to composition 1.**

| | **L*** | **a*** | **b*** | **Delta E** |
|---|---|---|---|---|
| **Compar. Comp.1** | 62.6 | 11.8 | 58.1 | 0.0 |
| **Compar. Comp. 2** | 55.2 | 12.4 | 47.1 | 13.3 |
| **Comp. 3** | 59.4 | 10.6 | 49.0 | 9.7 |
| **Comp. 4** | 64.2 | 10.4 | 54.0 | 4.6 |
| **Comp. 5** | 62.4 | 10.6 | 55.0 | 3.3 |

Off color was observed as a darker, brownish appearance of the cube. As can be seen from the results, the addition of the phosphates significantly limited the colour formation in the samples: sodium dihydrogen phosphate decreases the colour formation in the cube with ferric pyrophosphate significantly, while triphosphate and polyphosphate decrease it to an even larger extent.

### Example 3

Following the same procedures as described in Example 1, various iron salts in combination with phosphates were tested. The compositions are given in table 5, the results in table 6.

**Table 5: compositions of Example 3; all numbers in weight%.**

| **Ingredient** | **Compar. Comp. 1** | **Comp. 2** | **Comp. 3** | **Comp.4** | **Comp.5** |
|---|---|---|---|---|---|
| NaCl | 53.0 | 52.4 | 52.5 | 52.5 | 52.6 |
| Sucrose | 15.5 | 15.5 | 15.5 | 15.5 | 15.5 |
| Corn starch | 5.7 | 5.7 | 5.7 | 5.7 | 5.7 |
| Palm stearate | 7.0 | 7.0 | 7.0 | 7.0 | 7.0 |
| MSG | 14.0 | 14.0 | 14.0 | 14.0 | 14.0 |
| Yeast | 3.0 | 3.0 | 3.0 | 3.0 | 3.0 |
| Herbs and spices | 1.8 | 1.8 | 1.8 | 1.8 | 1.8 |
| Ferric phosphate | | 0.2 | 0.2 | 0.2 | 0.2 |
| Trisodium phosphate | | | 0.3 | | |
| Disodium hydrogenphosphate | | | | 0.3 | |
| Sodium dihydrogenphosphate | | | | | 0.2 |
| Sodium pyrophosphate | | 0.4 | | | |
| **total** | **100.0** | **100.0** | **100.0** | **100.0** | **100.0** |

| | | | | | |
|---|---|---|---|---|---|
| Comp.=composition. Compar. Comp.= comparative composition. | | | | | |

**Table 6: L*a*b* values of the seasoning cubes measured in the accelerated test after 21 days. Delta E values relative to composition 1.**

| | **L*** | **a*** | **b*** | **Delta E** |
|---|---|---|---|---|
| **Compar. Comp. 1** | 62.6 | 11.8 | 58.1 | 0.0 |
| **Comp. 2** | 61.3 | 11.1 | 54.1 | 4.3 |
| **Comp. 3** | 57.9 | 11.2 | 49.4 | 9.9 |
| **Comp. 4** | 57.7 | 11.1 | 48.6 | 10.7 |
| **Comp. 5** | 57.2 | 11.6 | 48.0 | 11.5 |

Off color was observed as a light brownish appearance of the cube. As can be seen from the results, all samples showed less discoloration than the samples with ferric pyrophosphate (see Example 1). The combination of ferric phosphate with sodium pyrophosphate gave the least discoloration.

### Example 4

Following the same procedures as described in Example 1, the effect of FeSO4 in combination with sodium pyrophosphate was tested. The compositions are given in table 7, the results in table 8.

**Table 7: compositions of Example 3; all numbers in weight%. Comp.=composition. Compar. Comp.= comparative composition.**

| **Ingredient** | **Compar. Comp. 1** | **Compar. Comp. 2** | **Comp. 3** | **Compar. Comp. 4** | **Comp. 5** |
|---|---|---|---|---|---|
| NaCl | 53.0 | 52.8 | 52.4 | 52.6 | 52.2 |
| Sucrose | 15.5 | 15.5 | 15.5 | 15.5 | 15.5 |
| Corn starch | 5.7 | 5.7 | 5.7 | 5.7 | 5.7 |
| Palm stearate | 7.0 | 7.0 | 7.0 | 7.0 | 7.0 |
| MSG | 14.0 | 14.0 | 14.0 | 14.0 | 14.0 |
| Yeast | 3.0 | 3.0 | 3.0 | 3.0 | 3.0 |
| Herbs and spices | 1.8 | 1.8 | 1.8 | 1.8 | 1.8 |
| Ferrous sulphate | | 0.2 | 0.2 | | |
| Ferrous lactate hydrate | | | | 0.4 | 0.4 |
| Sodium pyrophosphate | | | 0.4 | | 0.4 |
| **total** | **100.0** | **100.0** | **100.0** | **100.0** | **100.0** |

**Table 8: L*a*b* values of the seasoning cubes measured in the accelerated test after 21 days. Delta E values relative to composition 1.**

| | L* | a* | b* | Delta E |
|---|---|---|---|---|
| composition 1 | 62.6 | 11.8 | 58.1 | 0.0 |
| composition 2 | 36.7 | 5.2 | 8.0 | 56.8 |
| composition 3 | 58.1 | 10.9 | 48.6 | 10.6 |
| composition 4 | 52.5 | 11.2 | 43.8 | 17.5 |
| composition 5 | 55.5 | 12.3 | 47.4 | 12.8 |

As can be seen from the results, ferrous sulphate on its own (comparative composition 2) gave severe discolouration. Off color was observed as dark speckles and darker color of the cube. Also ferrous lactate on its own resulted in off color formation. (comparative composition 4). Off color was observed in this case as a darker, brownish appearance of the cube. The presence of sodium pyrophosphate (composition 3 and 5) resulted in a significant reduction of off color formation.

### Comparative example 5

As a comparative example, the use of sodium citrate and sodium calcium EDTA was tested in combination with ferric pyrophosphate and compared to ferric pyrophosphate in combination with sodium pyrophosphate. The procedure as described in Example 1 was followed. The compositions are given in table 9 and the results in table 10.

**Table 9: compositions of Example 3; all numbers in weight%. Comp.=composition. Compar. Comp.= comparative composition.**

| **Ingredient** | **Compar. comp. 1** | **Compar. comp. 2** | **Compar. comp. 3** | **Compar. comp. 4** |
|---|---|---|---|---|
| NaCl | 53.0 | 52.6 | 52.1 | 50.7 |
| Sucrose | 15.5 | 15.5 | 15.5 | 15.5 |
| Corn starch | 5.7 | 5.7 | 5.7 | 5.7 |
| Palm stearate | 7.0 | 7.0 | 7.0 | 7.0 |
| MSG | 14.0 | 14.0 | 14.0 | 14.0 |
| Yeast | 3.0 | 3.0 | 3.0 | 3.0 |
| Herbs and spices | 1.8 | 1.8 | 1.8 | 1.8 |
| Ferric pyrophosphate | | 0.4 | 0.4 | 0.4 |
| Disodium calcium EDTA | | | 0.5 | |
| Trisodium citrate | | | | 1.9 |
| **total** | **100.0** | **100.0** | **100.0** | **100.0** |

**Table 10: L*a*b* values of the seasoning cubes measured in the accelerated test after 21 days. Delta E values relative to composition 1.**

| | **L*** | **a*** | **b*** | **Delta E** | **Off color** |
|---|---|---|---|---|---|
| **Compar. comp. 1** | 62.6 | 11.8 | 58.1 | 0.0 | |
| **Compar. comp. 2** | 55.17 | 12.4 | 47.1 | 13.3 | brownish |
| **Compar. comp. 3** | 47.6 | 13.1 | 20.9 | 40.1 | dark brown |
| **Compar. comp. 4** | 50.0 | 11.5 | 40.2 | 21.9 | dark brown |

As can be seen from the results, the use of the two most commonly used sequestrants did not give similar improvement of the colour stability of the seasoning cube: in fact, in both cases much more discolouration was observed as compared with the sample with ferric pyrophosphate only, demonstrating the unique properties of phosphate salts, as exemplified in the previous examples 1 to 4.

## Claims

1. Savoury food concentrate comprising:
• NaCl,
• glutamate,
• iron salt, further comprising
• phosphate salt, not being an iron phosphate.

2. Food concentrate according to claim 1, wherein iron salt comprises one of the group consisting of ferrous sulphate, ferrous gluconate, ferrous lactate, ferrous bisglycinate, ferrous fumerate, ferric orthophosphate, ferric pyrophosphate, ferrous tartrate, ferrous succinate, ferrous saccharate, ferrous orthophosphate and mixtures thereof.

3. Food concentrate according to any one of the preceding claims, wherein the phosphate salt is selected form the group consisting of orthophosphate salt, diphosphate salt, triphosphate salt, polyphosphate salt and mixtures thereof.

4. Food concentrate according to any one of the preceding claims, wherein the phosphate salt is one of the group consisting of Na3PO4, Na2HPO4, NaH2PO4, K3PO4, K2HPO4, KH2PO4, calcium phosphate, magnesium phosphate, sodium pyrophosphate, sodium triphosphate, potassium pyrophosphate, potassium triphosphate, sodium polyphosphate, potassium polyphosphate and mixtures thereof.

5. Food concentrate according to any one of the preceding claims, wherein the iron salt comprises one of the group consisting of ferric pyrophosphate, ferrous sulphate and mixtures thereof, and the phosphate salt comprises Na-pyrophosphate.

6. Food concentrate according to any one of the preceding claims, wherein the glutamate is selected from one of the group consisting of monosodium glutamate, potassium glutamate, glutamic acid and mixtures thereof.

7. Food concentrate according to any one of the preceding claims, wherein the molar ratio of iron salt to phosphate salt, not being an iron phosphate, is between 1 and 10.

8. Food concentrate according to any one of the preceding claims, wherein the iron salt is present in an amount of from 0.03 to 2 wt%, based on the weight of the food concentrate.

9. Food concentrate according to any one of the preceding claims, wherein the phosphate salt is present in an amount of from 0.03 to 20 wt%, based on the weight of the food concentrate.

10. Food concentrate according to any one of the preceding claims, wherein the food concentrate is in the form of a cube or a tablet.

11. Food concentrate according to any one of the preceding claims, wherein the savoury food concentrate is in the form of a cube or a tablet and wherein
• NaCl is present in an amount of from 10 to 70 wt%,
• iron-salt is present in an amount of from 0.03 to 2 wt%, based on the weight of the food concentrate, and wherein the iron-salt is one of the group consisting of ferrous sulphate, ferrous gluconate, ferrous lactate, ferrous bisglycinate, ferrous fumerate, ferric orthophosphate, ferric pyrophosphate, ferrous tartrate, ferrous succinate, ferrous saccharate, ferrous orthophosphate and mixtures thereof, preferably wherein the iron- salt is selected from the group consisting of iron phosphate, ferrous sulphate and mixtures thereof, preferably is one of the group consisting of ferric pyrophosphate, ferrous sulphate and mixtures thereof.
• phosphate salt, not being an iron phosphate, is present in an amount of from 0.03 to 20 wt%, based on the weight of the food concentrate, and wherein this phosphate salt preferably is one of the group consisting of Na3PO4, Na2HPO4, NaH2PO4, K3PO4, K2HPO4, KH2PO4, sodium pyrophosphate, sodium triphosphate, potassium pyrophosphate, potassium triphosphate and mixtures thereof,
• the glutamate is selected from one of the group consisting of monosodium glutamate, potassium glutamate, glutamic acid and mixtures thereof, preferably comprises mono sodium glutamate,
• wherein the molar ratio of iron phosphate to phosphate salt, not being an iron phosphate, is between 1 and 10.

12. Process to provide a food concentrate according to any one of claims 1 to 11, the process comprising the steps of:
a) preparing a mixture comprising
• NaCl,
• iron salt,
• glutamate, and further comprising
• phosphate salt, not being an iron phosphate,
b) packaging.

13. Process according to claim 12, further comprising the step of shaping the mixture resulting from step a).

14. Process according to claim 13, wherein the shaping comprises a technique selected from the group consisting of compression, extrusion, roller compacting, granulation, agglomeration and mixtures thereof.

15. Use of a concentrate according to any one of claims 1 to 12 for preparing a bouillon, a soup, a sauce, a gravy or a seasoned dish.

## Patentansprüche

1. Pikantes Lebensmittelkonzentrat,
das Folgendes aufweist:
• NaCl,
• Glutamat,
• Eisensalz, wobei es ferner
• Phosphatsalz aufweist, das kein Eisenphosphat ist.

2. Lebensmittelkonzentrat nach Anspruch 1,
wobei das Eisensalz eines aus der Gruppe aufweist, bestehend aus: Eisen(II)-sulfat, Eisen(II)-gluconat, Eisen(II)-lactat, Eisen(II)-bisglycinat, Eisen(II)-fumarat, Eisen(III)-orthophosphat, Eisen(III)-pyrophosphat, Eisen(II)-tartrat, Eisen(II)-succinat, Eisen(II)-saccharat, Eisen(II)-orthophosphat und Gemischen davon.

3. Lebensmittelkonzentrat nach einem der vorstehenden Ansprüche,
wobei das Phosphatsalz aus der Gruppe ausgewählt ist, die aus Orthophosphatsalz, Diphosphatsalz, Triphosphatsalz, Polyphosphatsalz und Gemischen davon besteht.

4. Lebensmittelkonzentrat nach einem der vorstehenden Ansprüche,
wobei das Phosphatsalz eines aus der Gruppe ist, bestehend aus: Na₃PO₄, Na₂HPO₄, NaH₂PO₄, K₃PO₄, K₂HPO₄, KH₂PO₄, Calciumphosphat, Magnesiumphosphat, Natriumpyrophosphat, Natriumtriphosphat, Kaliumpyrophosphat, Kaliumtriphosphat, Natriumpolyphosphat, Kaliumpolyphosphat und Gemischen davon.

5. Lebensmittelkonzentrat nach einem der vorstehenden Ansprüche,
wobei das Eisensalz eines aus der Gruppe aufweist, die aus Eisen(III)-pyrophosphat, Eisen(II)-sulfat und Gemischen davon besteht, und das Phosphatsalz Na-pyrophosphat aufweist.

6. Lebensmittelkonzentrat nach einem der vorstehenden Ansprüche,
wobei das Glutamat aus einem aus der Gruppe ausgewählt ist, die aus Mononatriumglutamat, Kaliumglutamat, Glutaminsäure und Gemischen davon besteht.

7. Lebensmittelkonzentrat nach einem der vorstehenden Ansprüche,
wobei das Molverhältnis zwischen Eisensalz und Phosphatsalz, das kein Eisenphosphat ist, 1 bis 10 beträgt.

8. Lebensmittelkonzentrat nach einem der vorstehenden Ansprüche,
wobei das Eisensalz in einer Menge von 0,03 bis 2 Gew.-% vorliegt, und zwar auf das Gewicht des Lebensmittelkonzentrats bezogen.

9. Lebensmittelkonzentrat nach einem der vorstehenden Ansprüche,
wobei das Phosphatsalz in einer Menge von 0,03 bis 20 Gew.-% vorliegt, und zwar auf das Gewicht des Lebensmittelkonzentrats bezogen.

10. Lebensmittelkonzentrat nach einem der vorstehenden Ansprüche,
wobei das Lebensmittelkonzentrat in Form eines Würfels oder einer Tablette vorliegt.

11. Lebensmittelkonzentrat nach einem der vorstehenden Ansprüche,
wobei das pikante Lebensmittelkonzentrat in Form eines Würfels oder einer Tablette vorliegt, und wobei
• NaCl in einer Menge von 10 bis 70 Gew.-% vorliegt,
• das Eisensalz in einer Menge von 0,03 bis 2 Gew.-% vorliegt, und zwar auf das Gewicht des Lebensmittelkonzentrats bezogen, und wobei das Eisensalz eines aus der Gruppe ist, die aus Eisen(II)-sulfat, Eisen(II)-gluconat, Eisen(II)-lactat, Eisen(II)-bisglycinat, Eisen(II)-fumarat, Eisen(III)-orthophosphat, Eisen(III)-pyrophosphat, Eisen(II)-tartrat, Eisen(II)-succinat, Eisen(II)-saccharat, Eisen(II)-orthophosphat und Gemischen davon besteht, wobei das Eisensalz vorzugsweise aus der Gruppe ausgewählt ist, die aus Eisenphosphat, Eisen(II)-sulfat und Gemischen davon besteht, und vorzugsweise eines aus der Gruppe ist, die aus Eisen(III)-pyrophosphat, Eisen(II)-sulfat und Gemischen davon besteht,
• das Phosphatsalz, das kein Eisenphosphat ist, in einer Menge von 0,03 bis 20 Gew.-% vorliegt, und zwar auf das Gewicht des Lebensmittelkonzentrats bezogen, und wobei dieses Phosphatsalz vorzugsweise eines aus der Gruppe ist, die aus Na₃P0₄, Na₂HP0₄, NaH₂P0₄, K₃PO₄, K₂HPO₄, KH₂PO₄, Natriumpyrophosphat, Natriumtriphosphat, Kaliumpyrophosphat, Kaliumtriphosphat, und Gemischen davon besteht,
• das Glutamat eines aus der Gruppe ist, die aus Mononatriumglutamat, Kaliumglutamat, Glutaminsäure und Gemischen davon besteht, und vorzugsweise Mononatriumglutamat aufweist,
• wobei das Molverhältnis zwischen Eisenphosphat und Phosphatsalz, das kein Eisenphosphat ist, 1 bis 10 beträgt. ,

12. Verfahren zum Bereitstellen eines Lebensmittelkonzentrats nach einem der Ansprüche 1 bis 11,
wobei das Verfahren die folgenden Schritte aufweist:
a) Herstellen eines Gemischs, das Folgendes aufweist:
• NaCl,
• Eisensalz,
• Glutamat, und das ferner
• Phosphatsalz aufweist, das kein Eisenphosphat ist
b) Verpacken.

13. Verfahren nach Anspruch 12,
das ferner den Schritt des Formens des im Schritt a) entstandenen Gemischs aufweist.

14. Verfahren nach Anspruch 13,
wobei das Formen eine Methode aufweist, die aus der Gruppe ausgewählt ist, die aus Pressen, Extrudieren, Verdichten mit Walzen, Granulieren, Agglomerieren und Kombinationen davon besteht.

15. Verwendung eines Konzentrats nach einem der Ansprüche 1 bis 12 für die Herstellung einer Bouillon, einer Suppe, einer Soße, einer Bratensoße oder eines gewürzten Gerichts.

## Revendications

1. Concentré alimentaire goûteux comprenant :
▪ NaCl,
▪ un glutamate,
▪ un sel de fer, comprenant de plus
▪ un sel de phosphate, n'étant pas un phosphate de fer.

2. Concentré alimentaire selon la revendication 1, dans lequel le sel de fer comprend un du groupe constitué de sulfate ferreux, gluconate ferreux, lactate ferreux, bisglycinate ferreux, fumérate ferreux, orthophosphate ferrique, pyrophosphate ferrique, tartrate ferreux, succinate ferreux, saccharate ferreux, orthophosphate ferreux et des mélanges de ceux-ci.

3. Concentré alimentaire selon l'une quelconque des revendications précédentes, dans lequel le sel de phosphate est choisi dans le groupe constitué de sel d'orthophosphate, sel de diphosphate, sel de triphosphate, sel de polyphosphate et mélanges de ceux-ci.

4. Concentré alimentaire selon l'une quelconque des revendications précédentes, dans lequel le sel de phosphate est un du groupe constitué de Na₃PO₄, Na₂HPO₄, NaH₂PO₄, K₃PO₄, K₂HPO₄, KH₂PO₄, phosphate de calcium, phosphate de magnésium, pyrophosphate de sodium, triphosphate de sodium, pyrophosphate de potassium, triphosphate de potassium, polyphosphate de sodium, polyphosphate de potassium et mélanges de ceux-ci.

5. Concentré alimentaire selon l'une quelconque des revendications précédentes, dans lequel le sel de fer comprend un du groupe constitué de pyrophosphate ferrique, sulfate ferreux et mélanges de ceux-ci, et le sel de phosphate comprend Na-pyrophosphate.

6. Concentré alimentaire selon l'une quelconque des revendications précédentes, dans lequel le glutamate est choisi parmi un du groupe constitué de glutamate de monosodium, glutamate de potassium, acide glutamique et mélanges de ceux-ci.

7. Concentré alimentaire selon l'une quelconque des revendications précédentes, dans lequel le rapport molaire du sel de fer au sel de phosphate, n'étant pas un phosphate de fer, est de 1 à 10.

8. Concentré alimentaire selon l'une quelconque des revendications précédentes, dans lequel le sel de fer est présent dans une quantité de 0,03 à 2 % en poids, rapporté au poids du concentré alimentaire.

9. Concentré alimentaire selon l'une quelconque des revendications précédentes, dans lequel le sel de phosphate est présent dans une quantité de 0,03 à 20 % en poids, rapporté au poids du concentré alimentaire.

10. Concentré alimentaire selon l'une quelconque des revendications précédentes, dans lequel le concentré alimentaire est dans la forme d'un cube ou d'une tablette.

11. Concentré alimentaire selon l'une quelconque des revendications précédentes, dans lequel le concentré alimentaire goûteux est dans la forme d'un cube ou d'une tablette et dans lequel
▪ NaCl est présent dans une quantité de 10 à 70 % en poids,
▪ un sel de fer est présent dans une quantité de 0,03 à 2 % en poids, rapporté au poids du concentré alimentaire, et dans lequel le sel de fer est un du groupe constitué de sulfate ferreux, gluconate ferreux, lactate ferreux, bisglycinate ferreux, fumérate ferreux, orthophosphate ferrique, pyrophosphate ferrique, tartrate ferreux, succinate ferreux, saccharate ferreux, orthophosphate ferreux et mélanges de ceux-ci, de préférence dans lequel le sel de fer est choisi dans le groupe constitué de phosphate de fer, sulfate ferreux et mélanges de ceux-ci, est de préférence un du groupe constitué de pyrophosphate ferrique, sulfate ferreux et mélanges de ceux-ci.
▪ un sel de phosphate, n'étant pas un phosphate de fer, est présent dans une quantité de 0,03 à 20 % en poids, rapporté au poids du concentré alimentaire, et dans lequel ce sel de phosphate est de préférence un du groupe constitué de Na₃PO₄, Na₂HPO₄, NaH₂PO₄, K₃PO₄, K₂HPO₄, KH₂PO₄, pyrophosphate de sodium, triphosphate de sodium, pyrophosphate de potassium, triphosphate de potassium et mélanges de ceux-ci,
▪ le glutamate est choisi parmi un du groupe constitué de glutamate de monosodium, glutamate de potassium, acide glutamique et mélanges de ceux-ci, comprend de préférence du glutamate de monosodium,
. dans lequel le rapport molaire de phosphate de fer à sel de phosphate, n'étant pas un phosphate de fer, est de 1 à 10.

12. Procédé de fourniture d'un concentré alimentaire selon l'une quelconque des revendications 1 à 11, le procédé comprenant les étapes:
a) de préparation d'un mélange comprenant
▪ NaCl,
▪ un sel de fer,
▪ un glutamate, et comprenant de plus
▪ un sel de phosphate, n'étant pas un phosphate de fer,
b) d'emballage.

13. Procédé selon la revendication 12, comprenant de plus l'étape de façonnage du mélange résultant de l'étape a).

14. Procédé selon la revendication 13, dans lequel le façonnage comprend une technique choisie dans le groupe constitué de compression, extrusion, compactage au rouleau, granulation, agglomération et mélanges de ceux-ci.

15. Utilisation d'un concentré selon l'une quelconque des revendications 1 à 12 pour la préparation d'un bouillon, d'une soupe, d'une sauce, d'un jus ou d'un plat assaisonné.
